# EUROPEAN PATENT APPLICATION

(11) **EP 3 190 561 A1**
(43) Date of publication of application: **12.07.2017**
(21) Application number: 16206783.9
(22) Date of filing: 23.12.2016
(51) Int. Cl.: G06Q 50/00

(54) **METHOD AND DEVICE FOR SENDING INFORMATION**

(30) Priority: 08.01.2016 CN 201610012033
(71) Applicant: Beijing Xiaomi Mobile Software Co., Ltd., Beijing 100085 (CN)
(72) Inventor: HOU, Enxing, BEIJING, 100085 (CN); DING, Yi, BEIJING, 100085 (CN); SU, Benchang, BEIJING, 100085 (CN)
(74) Representative: Cougard, Jean-Marie

(57) **Abstract**

The present disclosure relates to a method and device for sending information. The method comprises: determining (S101) whether second terminal communication information of a second terminal user is acquired; generating (S102) a first friend-adding prompt according to the second terminal communication information if the second terminal communication information is acquired; sending (S103) first terminal communication information to the second terminal, such that the second terminal generates a second friend-adding prompt according to the first terminal communication information, the second friend-adding prompt being used to prompt the second terminal user to add the first terminal user as a friend.

## Description

### FIELD

The present disclosure generally relates to the field of information processing technology, and more particularly to method and device for sending information.

### BACKGROUND

Currently, when a user adds a friend by communication application programs, the friend-adding is always achieved through scanning a two-dimension code of the friend's communication application programs or searching a communication account of the friend's communication application programs to send a friend request. However, the friend-adding may not be completed if the user forgets to add the friend after the two-dimension code or communication account of the friend's communication application programs is acquired.

### SUMMARY

A method and device for sending information is provided in the present disclosure. The technical solutions are as follows:
In accordance with the first aspect of the embodiments of the present disclosure, a method implemented by a first terminal (so-called "home terminal') for sending information is provided, comprising: determining whether second terminal communication information associated with a user of a second terminal is acquired; generating a first friend-adding prompt according to the second terminal communication information if the second terminal communication information is acquired, the first friend-adding prompt being used to prompt a user of the first terminal to add the second terminal user as a friend; and sending first terminal communication information to the second terminal, such that the second terminal generates a second friend-adding prompt according to the first terminal communication information, the second friend-adding prompt being used to prompt the second terminal user to add the first terminal user as a friend.

In one embodiment, the second terminal communication information may comprise at least one of the following items of information: a communication account of the second terminal user, a two-dimensional code identification corresponding to the communication account of the second terminal user and a bar code identification corresponding to the communication account of the second terminal user; the first terminal communication information may comprise at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user and an age of the first terminal user.

In one embodiment, the method may further comprise: initiating a first friend-adding request to the second terminal according to the first friend-adding prompt; or receiving a second friend-adding request sent by the second terminal according to the second friend-adding prompt.

In one embodiment, the method may further comprise: establishing a communication connection with the second terminal, and sending a prompt information that allows communication to the second terminal, if a friend confirmation instruction for the first friend-adding request or for the second friend-adding request is detected.

In one embodiment, the method may further comprise: generating a reject adding prompt information, and deleting the acquired second terminal communication information, if it is detected that the second terminal rejects a first friend-adding request initiated by the first terminal according to the second friend-adding prompt.

In one embodiment, the deleting the acquired second terminal communication information may comprise: determining whether a cumulative number of times that the second terminal rejects a friend-adding request initiated by the first terminal is greater than a preset number of times; and deleting the acquired second terminal communication information if the cumulative number of times is greater than the preset number of times;
or generating a delete prompt instruction if the cumulative number of times is less than or equal to the preset number of times; and deleting the acquired second terminal communication information if a delete confirmation instruction for the delete prompt instruction is received.

In one embodiment, the method may further comprise: judging whether the second terminal communication information is reacquired after the acquired second terminal communication information is deleted; and intercepting a re-initiated first friend-adding request such that the second terminal cannot receive the re-initiated first friend-adding request, if the second terminal communication information is reacquired and a first friend-adding request is re-initiated to the second terminal.

In one particular embodiment, the steps of the method for sending information are determined by computer program instructions.

Consequently, according to a fourth aspect, the invention is also directed to a computer program for executing the steps of a method for sending information as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

In accordance with the second aspect of embodiments of the present disclosure, a first terminal (or device) so-called "home terminal" for sending information is provided, comprising: a determining module configured to determine whether second terminal communication information associated with a user of a second terminal is acquired; a generating module configured to generate a first friend-adding prompt according to the second terminal communication information if the second terminal communication information is acquired, the first friend-adding prompt being used to prompt a user of the first terminal to add the second terminal user as a friend; and a sending module configured to send first terminal communication information to the second terminal, such that the second terminal generates a second friend-adding prompt according to the first terminal communication information, the second friend-adding prompt being used to prompt the second terminal user to add the first terminal user as a friend.

In one embodiment, the second terminal communication information may comprise at least one of the following items of information: a communication account of the second terminal user, a two-dimensional code identification corresponding to the communication account of the second terminal user and a bar code identification corresponding to the communication account of the second terminal user;
and the first terminal communication information may comprise at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user and an age of the first terminal user.

In one embodiment, the first terminal may further comprise: an initiating module configured to initiate a first friend-adding request to the second terminal according to the first friend-adding prompt; and a receiving module configured to receive a second friend-adding request sent by the second terminal according to the second friend-adding prompt.

In one embodiment, the first terminal may further comprise: a first processing module configured to establish a communication connection with the second terminal, and send a prompt information that allows communication to the second terminal, if a friend confirmation instruction for the first or second friend-adding request is monitored.

In one embodiment, the first terminal may further comprise: a second processing module configured to generate a reject adding prompt information, and delete the acquired second terminal communication information, if it is detected that the second terminal rejects a first friend-adding request initiated by the first terminal according to the second friend-adding prompt.

In one embodiment, the second processing module may comprise: a first determining sub-module configured to determine whether a cumulative number of times that the second terminal rejects a first friend-adding request initiated by the first terminal is greater than a preset number of times; and a first deleting sub-module configured to delete the acquired second terminal communication information if the cumulative number of times is greater than the preset number of times;
or a generating sub-module configured to generate a delete prompt instruction if the cumulative number of times is less than or equal to the preset times; and a second deleting sub-module configured to delete the acquired second communication information if a delete confirmation instruction for the delete prompt instruction is received.

In one embodiment, the first terminal may further comprise: a judging module configured to judge whether the second terminal communication information is reacquired after the acquired second terminal communication information is deleted; and an intercepting module configured to intercept a re-initiated first friend-adding request such that the second terminal cannot receive the re-initiated first friend-adding request, if the second terminal communication information is reacquired and a first friend-adding request is re-initiated to the second terminal.

In accordance with the third aspect of the embodiments of the present disclosure, a first terminal for sending information is provided, comprising: a processor; a memory for storing processor-executable instructions; wherein the processor is configured to: determine whether second terminal communication information of a second terminal user is acquired; generate a first friend-adding prompt according to the second terminal communication information if the second terminal communication information is acquired, the first friend-adding prompt being used to prompt the first terminal user to add the second terminal user as a friend; and send first terminal communication information to the second terminal, such that the second terminal generates a second friend-adding prompt according to the first terminal communication information, the second friend-adding prompt being used to prompt the second terminal user to add the first terminal user as a friend.

The technical solutions provided by embodiments of the present disclosure may comprise the following beneficial effects:
For the technical solutions provided by embodiments of the present disclosure, when a first terminal acquires second terminal communication information of a second terminal user, a first friend-adding prompt may be generated according to the second terminal communication information and first terminal communication information may be sent to the second terminal, such that the second terminal may also have the first terminal communication information of the first terminal user, and then a second friend-adding prompt may be generated according to the first terminal communication information. In this way, either the first terminal or the second terminal may add each other as a friend actively, so as to avoid that the both sides cannot be friends if the first terminal user forgets to add the second terminal user as a friend after the second terminal communication information of the second terminal user is acquired.

It is to be understood that the forgoing general description and the following detailed description are illustrative and explanatory only, and are not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a flow chart illustrating a method for sending information according to an exemplary embodiment;
Fig. 2A is a flow chart illustrating another method for sending information according to an exemplary embodiment;
Fig. 2B is a flow chart illustrating another method for sending information according to an exemplary embodiment;
Fig. 3A is a flow chart illustrating another method for sending information according to an exemplary embodiment;
Fig. 3B is a flow chart illustrating another method for sending information according to an exemplary embodiment;
Fig. 4 is a flow chart illustrating another method for sending information according to an exemplary embodiment;
Fig. 5 is a block diagram illustrating a device for sending information according to an exemplary embodiment;
Fig. 6A is a block diagram illustrating another device for sending information according to an exemplary embodiment;
Fig. 6B is a block diagram illustrating another device for sending information according to an exemplary embodiment;
Fig. 7A is a block diagram illustrating another device for sending information according to an exemplary embodiment;
Fig. 7B is a block diagram illustrating another device for sending information according to an exemplary embodiment;
Fig. 8A is a block diagram illustrating another device for sending information according to an exemplary embodiment;
Fig. 8B is a block diagram illustrating another device for sending information according to an exemplary embodiment;
Fig. 9 is a block diagram illustrating another device for sending information according to an exemplary embodiment;
Fig. 10 is a block diagram illustrating a device applicable to sending information according to an exemplary embodiment;

### DETAILED DESCRIPTION

Exemplary embodiments will now be illustrated in detail, examples of which are illustrated in the accompanying drawings. When the following description refers to the accompanying drawings, the same numbers in different drawings represent the same or similar elements, unless otherwise described. The implementations described in the following exemplary embodiments do not represent all of the implementations consistent with the present disclosure. Instead, they are merely examples of devices and methods consistent with aspects of the present disclosure as recited in the appended claims.

Currently, when a user add a friend by communication application programs, it is always through scanning a two-dimension code of the friend's communication application programs, or searching a communication account of the friend's communication application programs to send a friend request so as to achieve the friend-adding. However, the friend-adding may not be completed if the user forgets to add the friend after the two-dimension code or communication account of the friend's communication application programs is acquired.

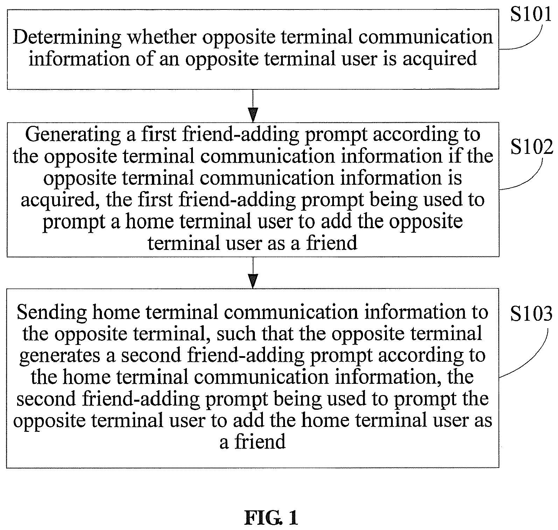

To solve the foregoing technical problems, the present disclosure provides a method for sending information, the method may be used in information sending programs, systems or devices, and the executive body corresponding to the method may be terminals carried by users. As illustrated in Fig. 1, the method, implemented by a first terminal also referred to hereinafter as "home terminal" may comprise step S101 to step S103 according to a particular embodiment:
In step S101, it is determined whether second terminal communication information associated with a user (called "second terminal user") of a second terminal is acquired; wherein the second terminal communication information may be used to uniquely identify the second terminal, in which the second terminal communication information may be at least one of the following information: a communication account of the second terminal, a two-dimensional code identification corresponding to the communication account of the second terminal user, a bar code identification corresponding to the communication account of the second terminal user, and the communication account may be an account of some communication application program used by the second terminal user.

In the embodiments of the present disclosure, the second terminal (also called "opposite terminal") is a terminal which cooperates with the first terminal (also called "home terminal") so that both terminals may perform a process of friend-adding, as explained earlier. Such cooperation may be rendered possible for instance when the first terminal and second terminal are positioned opposite to each other, next to each other, or the like.

In step S102, a first friend-adding prompt may be generated according to the second terminal communication information if the second terminal communication information is acquired, wherein the first friend-adding prompt may be used to prompt the first terminal user to add the second terminal user as a friend;

The first friend-adding prompt may be generated automatically if the second terminal communication information of the second terminal user is acquired, wherein the first friend-adding prompt may be a virtual option button, or ordinary prompt information (e.g., text, image and the like), which may be used to send the first friend-adding request to the second terminal, for instance when an adding operation is detected on the first terminal to request adding the second terminal user as a friend.

The adding operation may be clicking the first friend-adding prompt for M1 times, sliding a preset adding track such as track "A" (wherein A is the initial of Ask) in the first friend-adding prompt interface, triggering a "add" option in the virtual option button if the first friend-adding prompt is a virtual option button, etc.

In step S103, first terminal communication information (also called "home terminal communication information") may be sent to the second terminal such that the second terminal generates a second friend-adding prompt according to the first terminal communication information, wherein the second friend-adding prompt may be used to prompt the second terminal user to add the first terminal user as a friend.

When the second terminal communication information of a second terminal user is acquired by the first terminal, first terminal communication information may be sent to the second terminal, such that the second terminal may also have the first terminal communication information of the first terminal user, and then the second friend-adding prompt may be generated according to the first terminal communication information. In this way, either the first terminal or the second terminal may add each other as a friend actively, so as to avoid that the both sides cannot be friends if the first terminal user forgets to add the second terminal user as a friend after the second terminal communication information of the second terminal user is acquired.

The second friend-adding prompt may also be a virtual option button, or ordinary prompt information (e.g., text, image and the like), which may be used to send a friend-adding request to the first terminal when the adding operation is received to request adding the first terminal user as a friend. The adding operation may be clicking the second friend-adding prompt for N1 times, sliding a preset adding track such as track "T" (wherein T is the initial of the spell of the Chinese character "Tian") in the second friend-adding prompt interface, triggering a "add" option in the virtual option button if the second friend-adding prompt is a virtual option button (such as an add button), etc.

In one embodiment, the second terminal communication information may comprise at least one of the following items of information: a communication account of the second terminal user, a two-dimensional code identification corresponding to the communication account of the second terminal user, a bar code identification corresponding to the communication account of the second terminal user;

The first terminal communication information may comprise at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user, an age of the first terminal user.

The first terminal communication information may comprise information such as a communication account which may uniquely identify the first terminal user, a two-dimensional code identification corresponding to the communication account of the first terminal user, a bar code identification corresponding to the communication account of the first terminal user, etc. The second terminal may generate the second friend-adding prompt automatically according to these items of information, so as to add the first terminal as a friend according to the second friend-adding prompt. Moreover, the first terminal communication information may also comprise the foregoing other items of information, thus the second terminal user may know the identity of the first terminal user in detail, so as to facilitate the second terminal user to make a right decision about whether to add the first terminal user as a friend or agree to add the first terminal user as a friend, which may avoid that the second terminal user adds or agrees to add the first terminal user as a friend blindly.

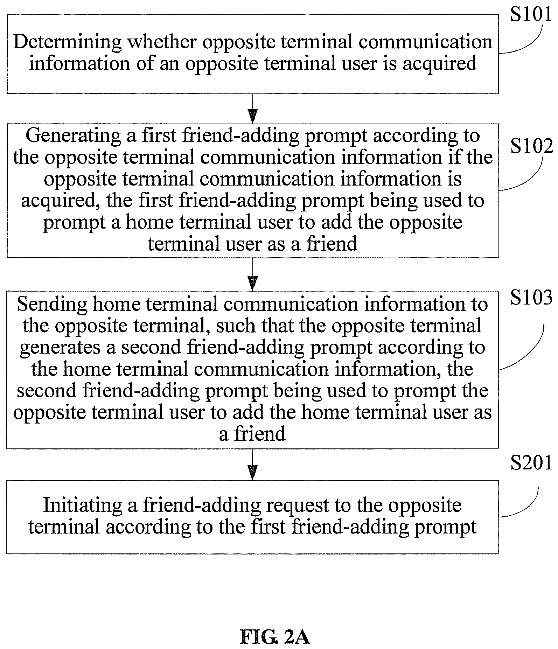

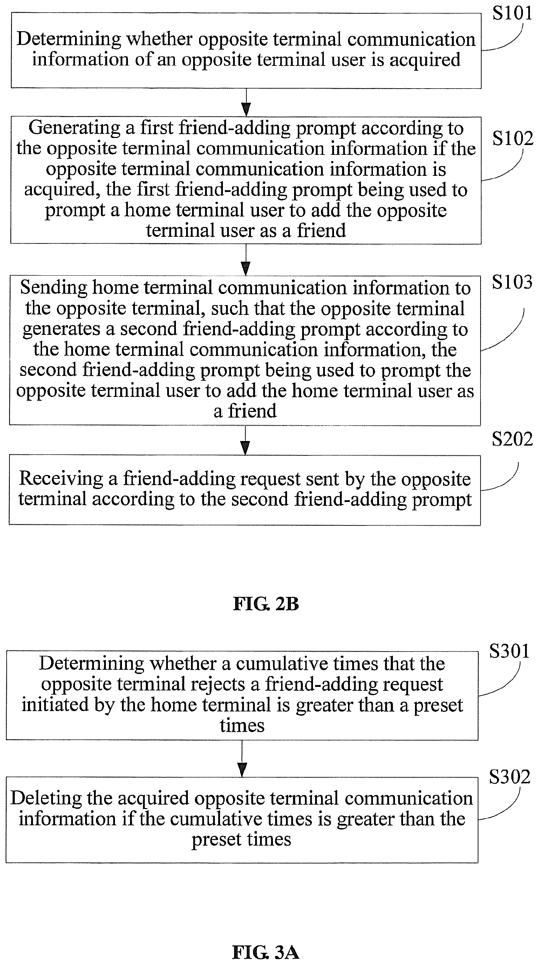

As illustrated in Fig. 2A, in one embodiment, the method implemented by a first terminal as illustrated in Fig. 1 may further comprise:
In step S201, a first friend-adding request may be sent to the second terminal according to the first friend-adding prompt; or
As illustrated in Fig. 2B, in one embodiment, the method implemented by a first terminal as illustrated in Fig. 1 may further comprise:
In step S202, a second friend-adding request sent by the second terminal according to the second friend-adding prompt may be received.

After the first friend-adding prompt and the second friend-adding prompt are generated, the first terminal may trigger the first friend-adding prompt to send a first friend-adding request to the second terminal actively, so as to request adding the second terminal user as a friend actively; or a second friend-adding request sent actively by the second terminal according to the second friend-adding prompt may be received.

In one embodiment, the foregoing method implemented by the first terminal may further comprise establishing a communication connection with the second terminal, and sending a prompt information that allows communication to the second terminal, if a friend confirmation instruction for the first or second friend-adding request is detected.

Whether the first terminal send the friend confirmation instruction to the second terminal actively in response to the second friend-adding request sent by the second terminal, or the second terminal send the friend confirmation instruction to the first terminal in response to the first friend-adding request sent by the first terminal, once the friend confirmation instruction is detected, it may indicate that the first terminal user and the second terminal user agree to add each other as a friend. Thus a communication connection with the second terminal may be established automatically to enable the both sides to communicate, and at the same time, the prompt information that allows communication may be sent to the second terminal to inform the second terminal user that the communication is available, so as to communicate with the first terminal user in time.

Furthermore, the prompt information that allows communication may be sent to the second terminal in a number of ways, for example, by establishing a communication window of the both sides directly and by displaying the prompt information in the form of text in the communication window, or by displaying the prompt information in the form of voice or image directly, or by sending the prompt information in the form of notification to the system notification bar of the second terminal.

In one embodiment, the foregoing method implemented by the first terminal may further comprise generating a reject adding prompt information and deleting the acquired second terminal communication information, if it is detected that the second terminal rejects a first friend-adding request initiated by the first terminal according to the second friend-adding prompt.

If it is detected that the second terminal rejects a first friend-adding request initiated by the first terminal according to the second friend-adding request (i.e., a friend rejection instruction sent by the second terminal for the first friend-adding request initiated by the first terminal is received), which may indicate that the second terminal does not agree the friend-adding request of the first terminal, then a reject adding prompt information may be generated automatically by the first terminal to inform the first terminal user that the second terminal user refuses to add the first terminal user as a friend. At the same time, the second terminal communication information previously acquired by the first terminal may be deleted automatically to prevent that the first terminal re-send a friend-adding request to the second terminal according to the second terminal communication information and the first friend-adding prompt, which may harass the second terminal user.

Wherein the second terminal may reject the first friend-adding request initiated by the first terminal according to the second friend-adding prompt in a number of ways, for example, by clicking the second friend-adding prompt for N2 times, by sliding a preset reject adding track such as track "R" (wherein R is the initial of Refuse) in the second friend-adding prompt interface, by triggering a "refuse" option in the virtual option button if the second friend-adding prompt is a virtual option button (such as an add button), etc.

Furthermore, the first terminal may also employ the foregoing ways to reject the second friend-adding request sent by the second terminal according to the first friend-adding prompt, for example, by clicking the first friend-adding prompt for M2 times, by sliding a preset reject adding track such as track "R" (wherein R is the initial of Refuse) in the second friend-adding prompt interface, by triggering a "refuse" option in the virtual option button if the first friend-adding prompt is a virtual option button, etc. Moreover, all the values of M1, M2, N1, N2 may be different.

As illustrated in Fig. 3A, in one embodiment, the foregoing deleting the acquired second terminal communication information may be performed as:
In step S301, it may be determined whether a cumulative number of times that the second terminal rejects a first friend-adding request initiated by the first terminal is greater than (or reaches) a preset number of times;
In step S302, the acquired second terminal communication information may be deleted if the cumulative number of times is greater than (or reaches) the preset number of times;

In order to prevent that the second terminal communication information acquired by the first terminal be deleted mistakenly, which may bring unnecessary trouble and inconvenience to the first terminal, before the second terminal communication information acquired by the first terminal is deleted, the cumulative times that the second terminal rejects a friend-adding request of the first terminal may also be determined, so as to determine whether the first terminal has harassed the second terminal according to the cumulative times. Specifically, if the cumulative times is greater than a preset number of times (e.g., 5 times), it may indicate that the second terminal is unwilling to add the first terminal as a friend and the first terminal has harassed the second terminal, then the second terminal communication information acquired by the first terminal may be deleted automatically, such that the first terminal may not be able to initiate a first friend-adding request to the second terminal conveniently and quickly according to the first friend-adding prompt, which may harass the second terminal in some degree.

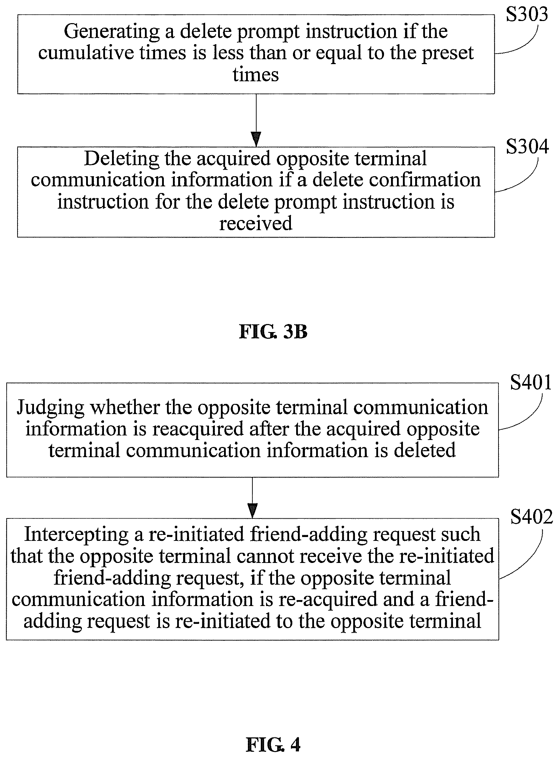

Or as illustrated in Fig. 3B, in one embodiment, the foregoing step of deleting the acquired second terminal communication terminal may be performed as follows:
In step S303, a delete prompt instruction may be generated if the cumulative number of times is less than or equal to the preset number of times;
In step S304, the acquired second terminal communication information may be deleted when a delete confirmation instruction for the delete prompt instruction is received.

If the cumulative number of times is less than or equal to the preset number of times, it may not be denied that the first terminal does not harass the second terminal, a delete prompt instruction may be generated automatically to avoid misoperations, such that the first terminal user may determine autonomously whether to delete the acquired second terminal communication information.

If the delete confirmation instruction is received, it may indicate that the first terminal user agrees to delete the acquired second terminal communication information, then the second terminal communication information acquired by the first terminal may be deleted, so that the first terminal may not be able to initiate a first friend-adding request to the second terminal conveniently and quickly, which may harass the second terminal in some degree.

As illustrated in Fig. 4, in one embodiment, the method may further comprise:
In step S401, it may be judged that whether the second terminal communication information is reacquired after the acquired second terminal communication information is deleted;
In step S402, a re-initiated friend-adding request may be intercepted such that the second terminal cannot receive the re-initiated first friend-adding request, when the second terminal communication information is reacquired and a first friend-adding request is re-initiated to the second terminal.

As the deleting the second terminal communication information acquired by the first terminal may mean that the second terminal is unwilling to add the first terminal as a friend and the first terminal has harassed the second terminal, as a result, if it is detected that the first terminal reacquires the second terminal communication information and the first terminal re-initiates a first friend-adding request to the second terminal, then the first friend-adding request may be intercepted automatically to prevent that the second terminal receives the friend-adding request and that the first terminal continuously sends harassing requests to the second terminal, thus the usage experience of the second terminal may be improved.

Of course, it may be confirmed from the user as to whether the friend-adding request is to be intercepted to avoid mistaken interception.

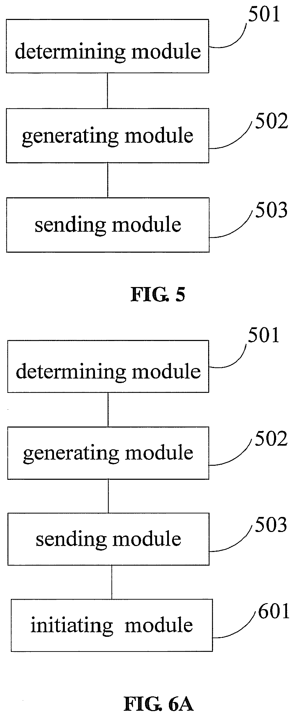

Corresponding to the foregoing method for sending information provided by embodiments of the present disclosure, a device for sending information is also provided in embodiments of the present disclosure, as illustrated in Fig. 5, the device may comprise: a determining module 501 may be configured to determine whether second terminal communication information of a second terminal user is acquired; a generating module 502 may be configured to generate a first friend-adding prompt according to the second terminal communication information if the second terminal communication information is acquired, the first friend-adding prompt may be used to prompt a first terminal user to add a second terminal user as a friend; and a sending module 503 may be configured to send first terminal communication information to the second terminal, such that the second terminal may generate a second friend-adding prompt according to the first terminal communication information, the second friend-adding prompt may be used to prompt the second terminal user to add the first terminal user as a friend;

In one embodiment, the second terminal communication information may comprise at least one of the following items of information: a communication account of the second terminal user, a two-dimensional code identification corresponding to the communication account of the second terminal user, a bar code identification corresponding to the communication account of the second terminal user;

The first terminal communication information may comprise at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user, an age of the first terminal user.

As illustrated in Fig. 6A, in one embodiment, the device may further comprise an initializing module 601 may be configured to initiate a first friend-adding request to the second terminal according to the first friend-adding prompt; or

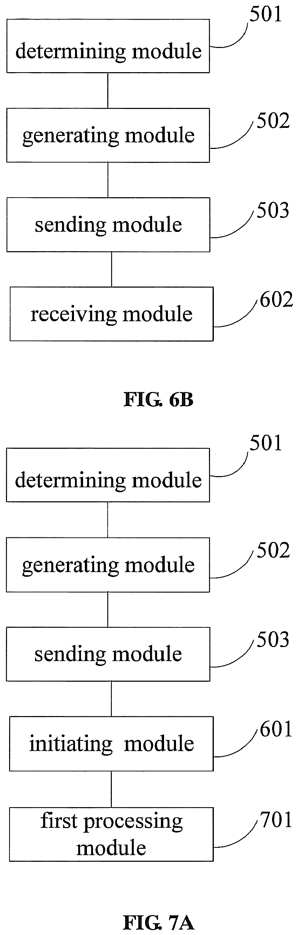

As illustrated in Fig. 6B, in one embodiment, the device may further comprise a receiving module 602 may be configured to receive a second friend-adding request sent by the second terminal according to the second friend-adding prompt.

As illustrated in Fig. 7A, in one embodiment, the device may further comprise a first processing module 701 may be configured to establish a communication connection with the second terminal, and send a prompt information that allows communication to the second terminal, if a friend confirmation instruction for a friend-adding request is detected.

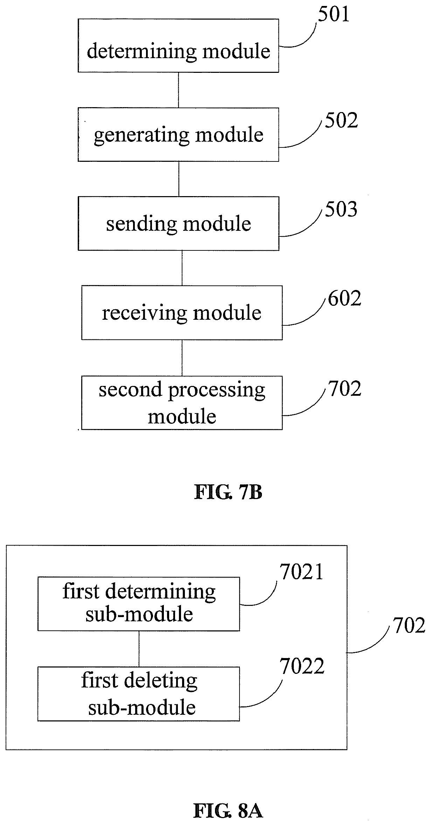

As illustrated in Fig. 7B, in one embodiment, the device may further comprise a second processing module 702 configured to generate a reject adding prompt information, and to delete the acquired second terminal communication information, if it is detected that the second terminal rejects a first friend-adding request initiated by the first terminal according to the second friend-adding prompt.

As illustrated in Fig. 8A, in one embodiment, the second processing module 702 may comprise: a first determining sub-module 7021 configured to determine whether a cumulative number of times that the second terminal rejects a first friend-adding request initiated by the first terminal is greater than a preset number of times; and a first deleting sub-module 7022 configured to delete the acquired second terminal communication information if the cumulative number of times is greater than the preset number of times; or

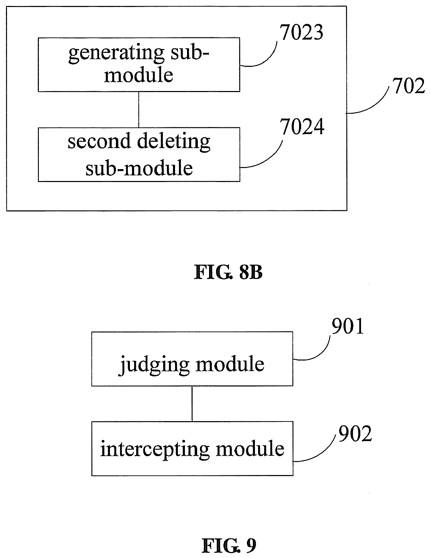

As illustrated in Fig. 8B, in one embodiment, the second processing module 702 may comprise: a generating sub-module 7023 configured to generate a delete prompt instruction if the cumulative number of times is less than or equal to the preset number times; and a second deleting sub-module 7024 configured to delete the acquired second communication information if a delete confirmation instruction for the delete prompt instruction is received.

As illustrated in Fig. 9, in one embodiment, the device may further comprise: a judging module 901 configured to judge whether the second terminal communication information is reacquired after the acquired second terminal communication information is deleted; and an intercepting module 902 configured to intercept a re-initiated first friend-adding request such that the second terminal cannot receive the re-initiated first friend-adding request, if the second terminal communication information is reacquired and a first friend-adding request is re-initiated to the second terminal.

In accordance with the third aspect of the embodiments of the present disclosure, a device for sending information is provided, comprising: a processor; a memory for storing processor-executable instructions; wherein the processor may be configured to: determine whether second terminal communication information of a second terminal user is acquired; generate a first friend-adding prompt according to the second terminal communication information if the second terminal communication information is acquired, the first friend-adding prompt being used to prompt the first terminal user to add the second terminal user as a friend; and send first terminal communication information to the second terminal, such that the second terminal generates a second friend-adding prompt according to the first terminal communication information, the second friend-adding prompt being used to prompt the second terminal user to add the first terminal user as a friend.

The foregoing processor may also be configured to:
The second terminal communication information may comprise at least one of the following items information: a communication account of the second terminal user, a two-dimensional code identification corresponding to the communication account of the second terminal user, a bar code identification corresponding to the communication account of the second terminal user.

The first terminal communication information may comprise at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user, an age of the first terminal user.

The foregoing processor may also be configured to:
The method may further comprise initiating a first friend-adding request to the second terminal according to the first friend-adding prompt; or receiving a second friend-adding request sent by the second terminal according to the second friend-adding prompt.

The foregoing processor may also be configured to:
The method may further comprise establishing a communication connection with the second terminal, and sending a prompt information that allows communication to the second terminal, if a friend confirmation instruction for the friend-adding request is detected.

The foregoing processor may also be configured to:
The method may further comprise generating a reject adding prompt information and deleting the acquired second terminal communication information, if it is detected that the second terminal rejects a first friend-adding request initiated by the first terminal according to the second friend-adding prompt.

The foregoing processor may also be configured to:
The deleting the acquired second terminal communication information may comprise determining whether a cumulative number of times that the second terminal rejects a friend-adding request initiated by the first terminal is greater than a preset number of times; deleting the acquired second terminal communication information if the cumulative number of times is greater than the preset number of times; or generating a delete prompt instruction if the cumulative number of times is less than or equal to the preset number of times; deleting the acquired second terminal communication information if a delete confirmation instruction for the delete prompt instruction is received.

The foregoing processor may also be configured to:
The method may further comprise judging whether the second terminal communication information is reacquired after the acquired second terminal communication information is deleted; and intercepting a re-initiated first friend-adding request such that the second terminal cannot receive the re-initiated first friend-adding request, if the second terminal communication information is reacquired and a first friend-adding request is re-initiated to the second terminal.

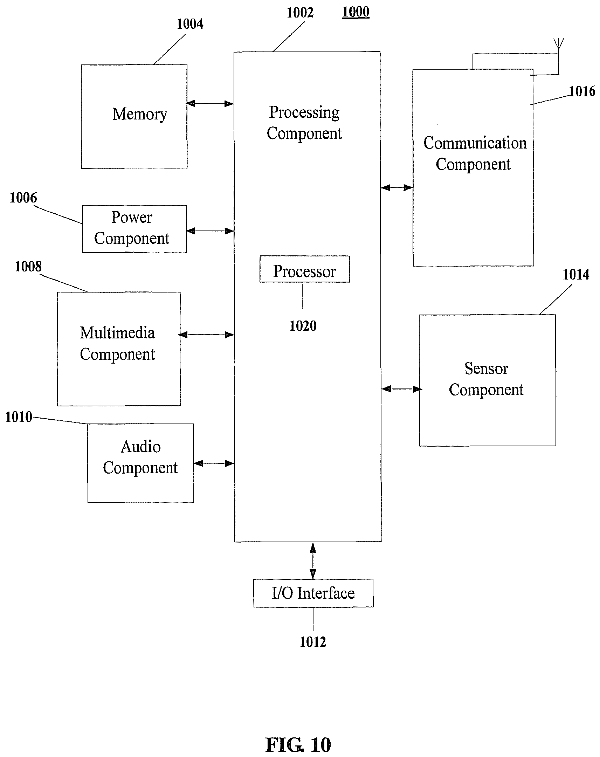

Fig. 10 is a block diagram illustrating a device 1000 for sending information according to an example embodiment, which may be applicable to terminal devices. For example, the device 100 may be mobile phone, computer, digital broadcast terminal, messaging device, game console, tablet device, medical device, fitness equipment, personal digital assistant, etc.

Referring to Fig. 10, the device 1000 may comprise one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls overall operation of the device 1000, such as the operations associated with display, telephone call, data communications, camera operations and recording operations. The processing element 1002 may comprise one or more processors 1020 to execute instructions to perform all or part of the steps in the above described methods. Additionally, the processing component 1002 may comprise one or more modules which facilitate the interaction between the processing component 1002 and other components. For instance, the processing component 1002 may comprise multimedia module to facilitate the interaction between the multimedia component 1008 and the processing component 1002.

The memory 1004 is configured to store various types of data to support the operation of the device 1000. Examples of such data comprise instructions for any applications or methods operated on the device 1000, contacts data, phonebook data, messages, images, videos, etc. The memory 1004 may be implemented using any type of volatile or non-volatile memory devices or a combination thereof, such as a static random access memory (SRAM), an electrically erasable programmable read only memory (EEPROM), an erasable programmable read only memory (EPROM), a programmable read-only memory (PROM), a read-only memory (ROM), a magnetic memory, a flash memory, a magnetic disk or optical disk.

The power component 1006 provides power to various components of the device 1000. The power component 1006 may comprise a power management system, one or more power sources, and any other components associated with the generation, management, and distribution of power in the device 1000

The multimedia component 1008 comprises a screen providing an output interface between the device 1000 and the user. In some embodiments, the screen may comprise a liquid crystal display (LCD) and a touch panel (TP). If the screen comprises the touch panel, the screen may be implemented as a touch screen to receive input signal from the users. The touch panel comprises one or more touch sensors to sense touches, swipes and gestures on the touch panel. The touch sensor may not only sense a boundary of a touch or swipe action, but also detect the duration and pressure associated with the touch or swipe operation. In some embodiments, the multimedia component 1008 comprises one front camera and/or rear camera. When the device 1000 is in an operation mode, such as a shooting mode or a video mode, the front camera and/or rear camera may receive external multimedia data. Each front camera and rear camera may be a fixed optical lens system or have focal length and optical zoom capability.

The audio component 1010 is configured to output and/or input audio signals. For example, the audio component 1010 comprises a microphone (MIC) configured to receive an external audio signal when the device 1000 is in an operation mode, such as a call mode, a recording mode and a voice recognition mode. The received audio signal may be further stored in the memory 1004 or transmitted via the communication component 1016. In some embodiments, the audio component 1010 further comprises a speaker to output audio signals.

The I/O interface 1012 provides an interface between the processing component 1002 and peripheral interface modules, such as a keyboard, a click wheel, buttons, and the like. The buttons may comprise, but are not limited to: a home button, a volume button, a starting button, and a locking button.

The sensor component 1014 comprises one or more sensors to provide various aspects of status assessments for the device 1000. For instance, the sensor component 1014 may detect an open/closed status of the device 1000, relative positioning of components, such as the display and the keypad of the device 1000, the sensor component 1014 may also detect a position change of the device 1000 or a component thereof, a presence or absence of a contact between the user and the device 1000, an orientation or acceleration/deceleration of the device 1000, and a temperature change of the device 1000. The sensor component 1014 may comprise a proximity sensor configured to detect the presence of nearby objects without any physical contact. The sensor component 1014 may further comprise a light sensor, such as a CMOS or CCD image sensor, for use in imaging applications. In some embodiments, the sensor component 1014 may further comprise an accelerometer sensor, a gyroscope sensor, a magnetic sensor, a pressure sensor, a microwave sensor, or a temperature sensor.

The communication component 1016 is configured to facilitate the device 1000 to communication, wired or wirelessly, with other devices. The device 1000 can access a communication standard based wireless network, such as WiFi, 2G, or 3G, or a combination thereof. In one exemplary embodiment, the communication component 1016 receives a broadcast signal from an external broadcast management system or broadcasts the associated information via a broadcast channel. In one exemplary embodiment, the communication component 1016 further comprises a near field communication (NFC) module to facilitate short-range communication. For example, the NFC module may be implemented based on radio frequency identification (RFID) technique, infrared data association (IrDA) technique, ultra-wideband (UWB) technique, Bluetooth (BT) technique, and other techniques.

In an exemplary embodiment, the device 1000 may be implemented with one or more application specific integrated circuits (ASIC), digital signal processors (DSP), digital signal processing devices (DSPD), programmable logic devices (PLD), field programmable gate arrays (FPGA), controllers, micro-controllers, microprocessors, or other electronic components, for performing the above described methods.

In an exemplary embodiment, there is also provided a non-transitory computer-readable storage medium including instructions, such as the memory 1004 including instructions, the instructions can be executed by the processor 1020 of the device 1000 to implement the above described methods. For example, the non-transitory computer-readable storage medium may be a ROM, a random access memory (RAM), a CD-ROM, a magnetic tape, a floppy disc, and an optical data storage device, etc.

A non-transitory computer-readable storage medium, when the instruction in the storage medium is executed by the processor of the device 1000, enable the device 1000 (corresponding to a first terminal) to perform a method for sending information, comprising: determining whether second terminal communication information of a second terminal user is acquired; generating a first friend-adding prompt according to the second terminal communication information if the second terminal communication information is acquired, the first friend-adding prompt may be used to prompt a first terminal user to add the second terminal user as a friend; and sending first terminal communication information to the second terminal, such that the second terminal generates a second friend-adding prompt according to the first terminal communication information, the second friend-adding prompt may be used to prompt the second terminal user to add the first terminal user as a friend.

In one embodiment, the second terminal communication information may comprise at least one of the following information: a communication account of the second terminal user, a two-dimensional code identification corresponding to the communication account of the second terminal user, a bar code identification corresponding to the communication account of the second terminal user;

The first terminal communication information may comprise at least one of the following information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user, an age of the first terminal user.

In one embodiment, the method may further comprise initiating a friend-adding request to the second terminal according to the first friend-adding prompt; or receiving a friend-adding request sent by the second terminal according to the second friend-adding prompt.

In one embodiment, the method may further comprise establishing a communication connection with the second terminal and sending a prompt information that allows communication to the second terminal, if a friend confirmation instruction for the friend-adding request is monitored.

In one embodiment, the method may further comprise generating a reject adding prompt information and deleting the acquired second terminal communication information, if it is monitored that the second terminal rejects a friend-adding request initiated by the first terminal according to the second friend-adding prompt.

In one embodiment, the deleting the acquired second terminal communication information may comprise: determining whether a cumulative times that the second terminal rejects a friend-adding request initiated by the first terminal is greater than a preset times; deleting the acquired second terminal communication information if the cumulative times is greater than the preset times; or generating a delete prompt instruction if the cumulative times is less than or equal to the preset times; deleting the acquired second terminal communication information if a delete confirmation instruction for the delete prompt instruction is received.

In one embodiment, the method may further comprise: judging whether the second terminal communication information is reacquired after the acquired second terminal communication information is deleted; and intercepting a re-initiated friend-adding request such that the second terminal cannot receive the re-initiated friend-adding request, if the second terminal communication information is re-acquired and a friend-adding request is re-initiated to the second terminal.

Other embodiments of the present disclosure will be apparent to those skilled in the art from consideration of the specification and practice of the disclosure disclosed herein. The present disclosure is intended to cover any variations, uses or adaptations of the present disclosure, and these variations, uses and adaptations follow the general principles of the present disclosure and comprise common general knowledge and conventional techniques of the art which are not disclosed herein. The specification and the embodiments are merely considered as exemplary, and the true scope of the present disclosure are indicated by the following claims.

It should be appreciated that the present disclosure is not limited to the exact structures that have been described above and illustrated in the accompanying drawings, and that various modifications and changes can be made without departing from the scope thereof. It is intended that the scope of the present disclosure is only limited by the appended claims.

## Claims

1. A method for sending information, implemented by a first terminal, **characterized by** comprising:
determining (S101) whether second terminal communication information associated with a user of a second terminal is acquired;
generating (S102) a first friend-adding prompt according to the second terminal communication information if the second terminal communication information is acquired, the first friend-adding prompt being used to prompt a user of the first terminal to add the second terminal user as a friend; and
sending (S103) first terminal communication information to the second terminal, such that the second terminal generates a second friend-adding prompt according to the first terminal communication information, the second friend-adding prompt being used to prompt the second terminal user to add the first terminal user as a friend.

2. The method of claim 1, wherein
the second terminal communication information comprising at least one of the following items of information: a communication account of the second terminal user, a two-dimensional code identification corresponding to the communication account of the second terminal user and a bar code identification corresponding to the communication account of the second terminal user; and
the first terminal communication information comprising at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user and an age of the first terminal user.

3. The method of claim 1 or 2, further comprising:
initiating (S201) a first friend-adding request to the second terminal according to the first friend-adding prompt; or receiving (S202) a second friend-adding request sent by the second terminal according to the second friend-adding prompt;
and
establishing a communication connection with the second terminal, and sending a prompt information that allows communication to the second terminal, if a friend confirmation instruction for the first or second friend-adding request is detected.

4. The method of claim 3, further comprising:
generating a reject adding prompt information, and deleting the acquired second terminal communication information, if it is detected that the second terminal rejects a first friend-adding request initiated by the first terminal according to the second friend-adding prompt.

5. The method of claim 4, wherein
the deleting the acquired second terminal communication information comprising:
determining (S301) whether a cumulative number of times that the second terminal rejects a first friend-adding request initiated by the first terminal is greater than a preset number of times; and deleting (S302) the acquired second terminal communication information if the cumulative number of times is greater than the preset number of times;
or
generating (S303) a delete prompt instruction if the cumulative number of times is less than or equal to the preset number of times; and deleting (S304) the acquired second terminal communication information if a delete confirmation instruction for the delete prompt instruction is received.

6. The method of claim 4 or 5, further comprising:
judging (S401) whether the second terminal communication information is reacquired after the acquired second terminal communication information is deleted; and
intercepting (S402) a re-initiated first friend-adding request such that the second terminal cannot receive the re-initiated first friend-adding request, if the second terminal communication information is re-acquired and a first friend-adding request is re-initiated to the second terminal.

7. A terminal, so-called first terminal, for sending information, **characterized by** comprising:
a determining module (501) configured to determine whether second terminal communication information associated with a user of a second terminal is acquired;
a generating module (502) configured to generate a first friend-adding prompt according to the second terminal communication information if the second terminal communication information is acquired, the first friend-adding prompt being used to prompt a user of the first terminal to add the second terminal user as a friend; and
a sending module (503) configured to send first terminal communication information to the second terminal, such that the second terminal generates a second friend-adding prompt according to the first terminal communication information, the second friend-adding prompt being used to prompt the second terminal user to add the first terminal user as a friend.

8. The terminal of claim 7, wherein
the second terminal communication information comprising at least one of the following items of information: a communication account of the second terminal user, a two-dimensional code identification corresponding to the communication account of the second terminal user and a bar code identification corresponding to the communication account of the second terminal user; and
the first terminal communication information comprising at least one of the following items of information: a communication account of the first terminal user, a two-dimensional code identification corresponding to the communication account of the first terminal user, a bar code identification corresponding to the communication account of the first terminal user, contact information of the first terminal user, a nickname corresponding to the communication account of the first terminal user, a location of the first terminal user, a date of birth of the first terminal user and an age of the first terminal user.

9. The terminal of claim 7 or 8, further comprising:
an initiating module (601) configured to initiate a first friend-adding request to the second terminal according to the first friend-adding prompt; or a receiving module (602) configured to receive a second friend-adding request sent by the second terminal according to the second friend-adding prompt;
and
a first processing module (701) configured to establish a communication connection with the second terminal, and send a prompt information that allows communication to the second terminal, if a friend confirmation instruction for the first or second friend-adding request is detected.

10. The terminal of claim 9, further comprising:
a second processing module (702) configured to generate a reject adding prompt information, and delete the acquired second terminal communication information, if it is detected that the second terminal rejects a first friend-adding request initiated by the first terminal according to the second friend-adding prompt.

11. The terminal of claim 10, wherein
the second processing module (702) comprises:
a first determining sub-module (7021) configured to determine whether a cumulative number of times that the second terminal rejects a first friend-adding request initiated by the first terminal is greater than a preset number of times; and a first deleting sub-module (7022) configured to delete the acquired second terminal communication information if the cumulative number of times is greater than the preset number of times;
or
a generating sub-module (7023) configured to generate a delete prompt instruction if the cumulative number of times is less than or equal to the preset number of times; and a second deleting sub-module (7024) configured to delete the acquired second communication information if a delete confirmation instruction for the delete prompt instruction is received.

12. The terminal of claim 10 or 11, further comprising:
a judging module (901) configured to judge whether the second terminal communication information is reacquired after the acquired second terminal communication information is deleted; and
an intercepting module (902) configured to intercept a re-initiated first friend-adding request such that the second terminal cannot receive the re-initiated first friend-adding request, if the second terminal communication information is re-acquired and a first friend-adding request is re-initiated to the second terminal.

13. A computer program including instructions for executing the steps of a method for sending information according to any one of claims 1 to 6 when said program is executed by a computer.

14. A recording medium readable by a computer and having recorded thereon a computer program including instructions for executing the steps of a method for sending information according to any one of claims 1 to 6.
